# EUROPEAN PATENT SPECIFICATION

(11) **EP 4 332 159 B1**
(45) Date of publication and mention of the grant of the patent: **18.06.2025**
(21) Application number: 23775185.4
(22) Date of filing: 27.02.2023
(51) Int. Cl.: C08K 5/00, C08K 5/3432, C08K 5/11, C08L 67/04, C08G 63/664, C08K 5/3462

(54) **POLYLACTIDE RESIN COMPOSITION HAVING EXCELLENT CRYSTALLIZATION HALF-TIME, AND METHOD FOR PREPARING SAME**
POLYLACTIDHARZZUSAMMENSETZUNG MIT HERVORRAGENDER KRISTALLISATIONSHALBZEIT UND VERFAHREN ZUR HERSTELLUNG DAVON
COMPOSITION DE RÉSINE DE POLYLACTIDE AYANT UN EXCELLENT DEMI-TEMPS DE CRISTALLISATION, ET SON PROCÉDÉ DE PRÉPARATION

(30) Priority: 22.03.2022 KR 20220035553
(43) Date of publication of application: 06.03.2024
(73) Proprietor: LG Chem, Ltd., Yeongdeungpo-gu Seoul 07336 (KR)
(72) Inventor: CHO, Jeong Hun, Daejeon 34122 (KR); LEE, Jeongkyu, Daejeon 34122 (KR); AN, Yujin, Daejeon 34122 (KR); CHOE, Yeonji, Daejeon 34122 (KR); OH, Sung Joon, Daejeon 34122 (KR); OH, Wan Kyu, Daejeon 34122 (KR)
(74) Representative: Goddar, Heinz J.
(86) International application number: PCT/KR2023/002704
(87) International publication number: WO 2023/182687

(56) References cited:
- EP-B1- 1 463 619
- JP-A- 2008 115 372
- JP-A- 2011 080 048
- JP-A- 2011 080 048
- JP-A- 2016 011 388
- JP-B2- 4 130 695
- US-A1- 2003 038 405
- QIU ZHAOBIN ET AL: "Effect of orotic acid on the crystallization kinetics and morphology of biodegradable poly (L-lactide) as an efficient nucleating agent", INDUSTRIAL & ENGINEERING CHEMISTRY RESEARCH, vol. 50, no. 21, 10 October 2011 (2011-10-10), pages 12299 - 12303, XP093095504, ISSN: 0888-5885, Retrieved from the Internet <URL:https://pubs.acs.org/doi/10.1021/ie2019596> [retrieved on 20240828], DOI: 10.1021/ie2019596
- BIAN, X ET AL.: "Synthesis of multi-arm poly (L-lactide) and its modification on linear polylactide", POLYMER BULLETIN, vol. 74, 2017, pages 245 - 262, XP036126097, DOI: 10.1007/s00289-016-1713-4

## Description

### [TECHNICAL FIELD]

The present invention relates to a polylactide resin composition excellent in crystallization half-life.

### [BACKGROUND ART]

Polylactide (or polylactic acid; PLA) resin is prepared based on biomass materials, and is an eco-friendly material which emits less global warming gas carbon dioxide during the production process, and is degraded by a specific temperature and composting facility. In recent years, it has also attracted attention as one of the materials that can replace existing crude oilbased resins as a measure for the upcycling of waste plastics and regulation on carbon emissions.

In addition, the polylactide resin has the advantages of being inexpensive compared to other biodegradable polymers and having high tensile strength and modulus properties.

However, the polylactide resin has a problem that a rigid polymer main chain is repeated in short units, the crystallization rate is slow due to slow chain mobility, and the molding cycle is long, thereby lowering the productivity. Therefore, in order to improve these problems, many studies are being conducted to introduce a material such as a nucleating agent to improve productivity and heat resistance.

In general, the materials used as the nucleating agents are mainly inorganic nucleating agents, and it has been reported that materials such as talc, mica, and nanoclay are used, and some of them are added during PLA molding, thereby capable of improving heat resistance and strength.

However, if such a nucleating agent is added in an excessive amount, there is a problem that the specific gravity of the resin increases and the transparency decreases. On the other hand, as a material that improves the crystallinity degree and transparency, organic nucleating agents such as LAK 301 (aromatic sulfonate derivative), sodium benzoate, N-aminophthalimide, phthalhydrazide, and cadmium phenylmalonate are used. However, these materials are not bio-based materials, and have dispersion problems with PLA resins.

Therefore, there is a need to introduce bio-based organic nucleating agents that can be prepared in eco-friendly products and, at the same time, do not impair transparency. In addition, there is a need to introduce a nucleating agent having less dispersion problems with the polylactide resin to further improve the crystallization half-life and crystallinity degree of the polylactide resin.

JP 4130695 B2 discloses a polylactic acid resin composition comprising a mixture of two nucleating agents.

JP 2011080048 A discloses a polylactic acid resin composition comprising high molecular weight polylactic acid with 50 to 99% by weight and low molecular weight polylactic acid containing a COOH group or ester residue of lactic acid as a nucleating agent.

EP 1 463 619 B1 discloses a method for making formed heat-resistant PLA articles.

Industrial & Engineering Chemistry Research, vol. 50, No. 21, 12299-12303, discloses an effect of orotic acid on the crystallization kinetics and morphology of biodegradable poly(L-lactide) as a nucleating agent.

### [DETAILED DESCRIPTION OF THE INVENTION]

### [TECHNICAL PROBLEM]

It is an object of the present disclosure to provide a polylactide resin composition excellent in crystallization half-life by using in combination with a specific nucleating agent.

### [TECHNICAL SOLUTION]

In order to achieve the above object, according to the present disclosure, there is provided the following polylactide resin composition:
A polylactide resin composition comprising a polylactide resin; a first nucleating agent; and a second nucleating agent,
wherein the polylactide resin composition has a crystallization half-life of 2 minutes or less at a crystallization temperature of 100 to 130°C,
the first nucleating agent is uracil, and contained in an amount of 0.1 to 5% by weight based on the total weight of the polylactide resin composition, and
the second nucleating agent is a compound containing a lactide oligomer structure, and contained in an amount of 3 to 25% by weight based on the total weight of the polylactide resin composition.

As used herein, the term "polylactide resin" is defined to comprehensively refer to a homopolymer or copolymer including a repeating unit represented by the following Chemical Formula.

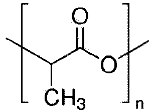

The polylactide resin can be prepared by a process including a step of forming the above repeating unit by the ring opening polymerization of the lactide monomer. The polymer obtained after the completion of such ring opening polymerization and the formation of the repeating unit can be referred to as the "polylactide resin".

At this time, the term "lactide monomer" can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide in a ratio of 50:50 is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and also a higher crystallinity degree than a polylactide having a low level of optical purity. However, the term "lactide monomer" is defined to include all types of lactides regardless of the characteristic differences of lactides depending on their types and the characteristic differences of the polylactide resins obtained therefrom.

Meanwhile, the polylactide resin composition according to the present disclosure has a weight average molecular weight of 70,000 to 400,000 as an example.

The present disclosure is characterized in that the polylactide resin is used in combination of the first nucleating agent and the second nucleating agent to thereby improve the crystallization half-life of the polylactide resin.

In particular, the polylactide resin composition is characterized in that the crystallization half-life is 5 minutes or less at a crystallization temperature of 100 to 130°C. Preferably, the crystallization half-time is 1.9 minutes or less, 1.8 minutes or less, 1.7 minutes or less, 1.6 minutes or less, 1.5 minutes or less, 1.4 minutes or less, 1.3 minutes or less, 1.2 minutes or less, 1.1 minutes or less, or 1.0 minutes or less. In addition, the crystallization half-life is 0.1 minutes or more, 0.2 minutes or more, 0.3 minutes or more, 0.4 minutes or more, or 0.5 minutes or more.

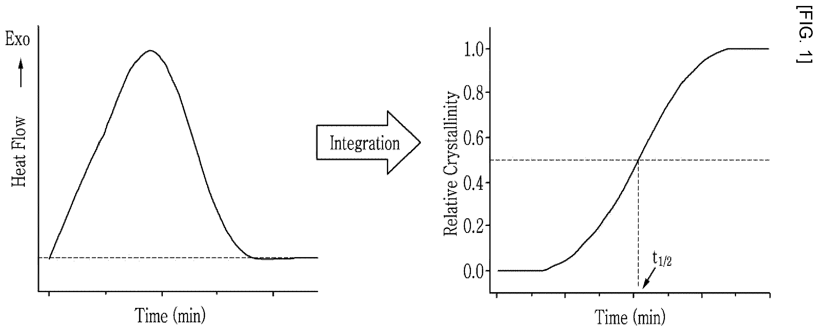

The term 'crystallization half-time (t_{1/2})' as used herein means the time (minutes) required to achieve 50% of crystallization, and is a useful indicator for evaluating relative crystallization rates. To determine the crystallization half-life, first, the relative crystallinity is determined. The relative crystallinity means the ratio between the total area of the exothermic peak over time in the isothermal crystallization process and the area when time t has passed. After conversion to relative crystallinity over time, the time at which the relative crystallinity reaches 0.5 can be determined as the crystallization half-life. This process is schematically shown in FIG. 1, and a more detailed measurement method can be embodied in Examples described later.

The term 'crystallization temperature' as used herein refers to the temperature at which the polylactide resin is melted to a predetermined temperature and then cooled in order to measure the crystallization half-life. For example, when a polylactide resin is melted at 200°C and then cooled up to 120°C at a cooling rate of 40°C/min to 100°C/min, the 120°C is referred to as the 'crystallization temperature'. In the present disclosure, the crystallization temperature is 100 to 130°C, for example 100°C, 110°C, 120°C, or 130°C. A specific method for measuring the crystallization half-life according to the crystallization temperature may be embodied in the following examples.

Preferably, the polylactide resin composition according to the present invention has a crystallinity degree of 35% or more at a crystallization temperature of 100 to 130°C. As described above, the polylactide resin composition according to the present invention is characterized by being excellent not only in crystallization half-life but also in crystallinity degree. Preferably, the crystallinity degree is 40% or more, 45% or more, or 50% or more. The method for measuring the crystallinity degree may be embodied in the following examples.

Meanwhile, the first nucleating agent is uracil. The first nucleating agent is a bio-based organic material, and is added to the polylactide resin, acts as a nucleation site and induces the crystal nucleus generation at high temperature, thereby capable of improving the crystallization half-life and crystallinity degree.

The first nucleating agent is contained in an amount of 0.1 to 5% by weight based on the total weight of the polylactide resin composition. If the content is less than 0.1% by weight, the effect due to the use of the first nucleating agent is insignificant, and if the content exceeds 5% by weight, there is a risk of impairing physical properties inherent in the polylactide resin. More preferably, the first nucleating agent is contained in an amount of 0.2% by weight or more, 0.3% by weight or more, 0.4% by weight or more, or 0.5% by weight or more; and 4.5% by weight or less, 4.0% by weight or less, or 3.5% by weight or less.

The second nucleating agent is a nucleating agent containing an oligomer structure of the lactide monomer. Due to the oligomer structure of the lactide monomer, it has high compatibility with the polylactide resin, and is added to the polylactide resin to play a role similar to that of a plasticizer. Thereby, a free volume can be formed in the polylactide resin to thereby enhance the chain mobility of the polylactide resin and improve the crystallization half-life and crystallinity degree.

Preferably, the second nucleating agent is a compound represented by the following Chemical Formula 1 and has a weight average molecular weight of 1,000 to 50,000: 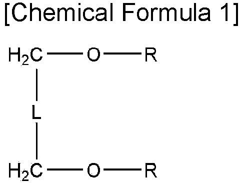
wherein, in Chemical Formula 1,
L is: 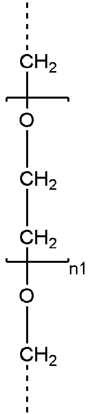
wherein,
n1 is an integer of 1 to 30, and
R is a substituent represented by the following Chemical Formula 2, 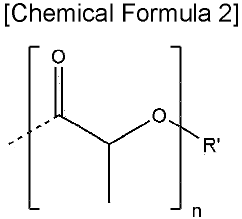
wherein,
n represents the number of repeating units, and
R' is hydrogen or acetyl.

The weight average molecular weight of the second nucleating agent may be adjusted according to the number of each lactide repeating unit. More preferably, the weight average molecular weight of the second nucleating agent is 1,100 or more, 1,200 or more, 1,300 or more, 1,400 or more, or 1,500 or more; and 40,000 or less, 30,000 or less, 20,000 or less, 10,000 or less, 9,000 or less, or 8,000 or less.

The second nucleating agent is contained in an amount of 3 to 25% by weight based on the total weight of the polylactide resin composition. If the content is less than 3% by weight, the effect due to the use of the second nucleating agent is insignificant, and if the content exceeds 25% by weight, there is a risk of impairing the physical properties inherent in the polylactide resin. More preferably, the second nucleating agent is contained in an amount of 3.5% by weight or more, 4.0% by weight or more, or 4.5% by weight or more; and 24% by weight or less, 23% by weight or less, 22% by weight or less, or 21% by weight or less.

Meanwhile, the method for preparing the above-mentioned polylactide resin composition according to the present disclosure is not particularly limited as long as it is a method of mixing the polylactide resin, the first nucleating agent, and the second nucleating agent. In one example, the above respective components can be prepared by a melt blending method.

### [ADVANTAGEOUS EFFECTS]

The above-mentioned polylactide resin composition according to the present disclosure is excellent in crystallization half-life and crystallinity degree. Therefore, the polylactide resin composition according to the present disclosure can maintain the properties inherent in the polylactide resin according to the present disclosure while having excellent processability.

### [BRIEF DESCRIPTION OF THE DRAWINGS]

FIG. 1 schematically illustrates the meaning of the crystallization half-life according to the present disclosure.

### [DETAILED DESCRIPTION OF THE EMBODIMENTS]

Below, embodiments of the present disclosure will be described in more detail with reference to examples. However, the following examples are for illustrative purposes only and are not intended to limit the scope of the present disclosure.

### Preparation Example 1: Preparation of Second Nucleating Agent (P10-A-002)

An oligomer was prepared using PEG-1000(P10) as an initiator. Specifically, lactide and P10 were added in a 20 mL vial at a molar ratio of 8:1 so that the total was 4.5 g, and Sn(Oct)₂ catalyst was added in amount to be 0.1 to 0.2 wt.%, and then reacted at 130°C for 4 hours. After adjusting the temperature to 120°C, acetic anhydride (4 equivalents relative to the terminal OH group) was added, and further reacted for 12 hours. After completion of the reaction, acetic acid as a byproduct and residual acetic anhydride were removed by vacuum drying to prepare a second nucleating agent having a structure in which the terminal group was substituted with an acetyl group, which were named P10-A-002, and the weight average molecular weights are shown in Table 1 below.

### Example and Comparative Example

Melt blending was performed using a Haake mixer equipment. Specifically, 65 g of PLA pellet (4032D from NatureWorks; weight average molecular weight of about 200,000) was added, and the first nucleating agent and the second nucleating agent shown in Table 1 below were added according to their contents. The nucleating agent in powder form was mixed with PLA pellet and added thereto. The nucleating agent having a melting point lower than the process operating temperature (180°C) was blended for 5 minutes (PLA was completely dissolved), and then added to a hopper. The operation was performed under the conditions of 180°C, 60 rpm and 10 minutes. The obtained PLA resin was subjected to isothermal DSC analysis, which will be described later, to confirm crystallization behavior at each crystallization temperature.

### Experimental Example

The physical properties of the first nucleating agent, second nucleating agent, and polylactide resin composition prepared above were measured by the following methods.

### 1) Weight average molecular weight

The number average molecular weight (Mn) and the weight average molecular weight (Mw) were calculated using a GPC (Gel Permeation Chromatography) device, and the oligomer molecular weight distribution (Mw/Mn) was measured, and specific measurement conditions are as follows.
- Column: PLgel Mixed E x 2
- Solvent: THF
- Flow rate: 0.7 mL/min
- Sample concentration: 3.0 mg/mL
- Injection volume: 100 µl
- Column temperature: 40°C
- Detector: Waters 2414 RID
- Standard: PS (Polystyrene)

### 2) DSC (Differential scanning calorimetry)

Each of the PLA resins prepared in Examples and Comparative Examples was completely melted at 200°C for 20 minutes through 1st heating to eliminate a thermal history. Then, after cooling to each crystallization temperature (100 to 130°C) at 100°C/min as quickly as possible, the heat flow was observed while maintaining the temperature at each crystallization temperature, and the crystallization half-time was measured. In addition, the crystallinity degree X was calculated using the following Equation (100% crystalline PLA ΔHm = 93 J/g).
- Crystallinity degree: (exothermic peak area in the cooling process, ΔHc) / (100% crystalline PLA ΔHm)

The results are shown in Table 1 below.

**[Table 1]**

| | 1^{st} nucleating agent | | 2^{nd} nucleating agent | | Crystallization half-life (t_{1/2}, min) | | | | Crystallinity degree (Xc, %) | | | |
|---|---|---|---|---|---|---|---|---|---|---|---|---|
| | Type | wt. % | Type | wt. % | 100 °C | 110 °C | 120 °C | 130 °C | 100 °C | 110 °C | 120 °C | 130 °C |
| Ex. 1 | Uracil | 3 | P10-A-002 (Mw: 6,000) | 5 | 1.2 | 1 | 1 | 1.2 | 38.9 | 44.1 | 49 | 51.9 |
| Ex. 2 | Uracil | 3 | P10-A-002 (Mw: 6,000) | 10 | 1 | 0.9 | 1 | 1.3 | 42.9 | 48.1 | 52 | 57.2 |
| Com. Ex. 1 | - | - | - | - | 41 | 44 | 43 | 74 | 41 | 47 | 51 | 56 |
| Com. Ex. 2 | Uracil | 3 | - | - | 2.3 | 1.6 | 1.4 | 1.6 | 38 | 40.7 | 45.8 | 49.7 |

As shown in Table 1, it was confirmed that in the case of Examples where the first nucleating agent and the second nucleating agent were used simultaneously according to the present disclosure, the crystallinity degree was equal to or similar to Comparative Examples, but the crystallization half-life was significantly shorter.

## Claims

1. A polylactide resin composition comprising a polylactide resin; a first nucleating agent; and a second nucleating agent,
wherein the polylactide resin composition has a crystallization half-life of 2 minutes or less at a crystallization temperature of 100 to 130°C, wherein the crystallization half-life is measured as disclosed in the specification,
the first nucleating agent is uracil, and contained in an amount of 0.1 to 5% by weight based on the total weight of the polylactide resin composition, and
the second nucleating agent is a compound containing a lactide oligomer structure, and contained in an amount of 3 to 25% by weight based on the total weight of the polylactide resin composition.

2. The polylactide resin composition of claim 1, wherein:
the polylactide resin composition has a crystallization half-life of 1.3 minutes or less at a crystallization temperature of 100 to 130°C.

3. The polylactide resin composition of claim 1, wherein:
the polylactide resin composition has a crystallinity degree of 35% or more at a crystallization temperature of 100 to 130°C, wherein the crystallinity degree is measured as disclosed in the specification.

4. The polylactide resin composition of claim 1, wherein:
the second nucleating agent is a compound represented by the following Chemical Formula 1, and has a weight average molecular weight of 1,000 to 50,000, wherein the weight average molecular weight is measured as disclosed in the specification: 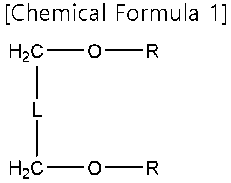
wherein, in Chemical Formula 1,
L is: 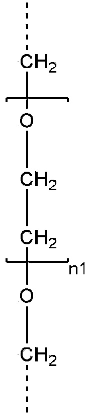
wherein,
n1 is an integer of 1 to 30, and
R is a substituent represented by the following Chemical Formula 2, 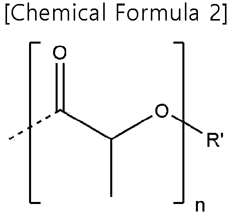
wherein,
n represents the number of repeating units, and
R' is hydrogen or acetyl.

5. The polylactide resin composition of claim 1, wherein:
a weight average molecular weight of the polylactide resin is 70,000 to 400,000, wherein the weight average molecular weight is measured as disclosed in the specification.

## Patentansprüche

1. Polylactidharzzusammensetzung, umfassend ein Polylactidharz; ein erstes Nukleierungsmittel; und ein zweites Nukleierungsmittel,
wobei die Polylactidharzzusammensetzung eine Kristallisationshalbwertszeit von 2 Minuten oder weniger bei einer Kristallisationstemperatur von 100 bis 130 °C aufweist, wobei die Kristallisationshalbwertszeit wie in der Beschreibung offenbart gemessen wird,
das erste Nukleierungsmittel Uracil ist und in einer Menge von 0,1 bis 5 Gew.-%, bezogen auf das Gesamtgewicht der Polylactidharzzusammensetzung, enthalten ist, und
das zweite Nukleierungsmittel eine Verbindung ist, die eine Lactidoligomerstruktur enthält, und in einer Menge von 3 bis 25 Gew.-%, bezogen auf das Gesamtgewicht der Polylactidharzzusammensetzung, enthalten ist.

2. Polylactidharzzusammensetzung nach Anspruch 1, wobei:
die Polylactidharzzusammensetzung eine Kristallisationshalbwertszeit von 1,3 Minuten oder weniger bei einer Kristallisationstemperatur von 100 bis 130 °C aufweist.

3. Polylactidharzzusammensetzung nach Anspruch 1, wobei:
die Polylactidharzzusammensetzung einen Kristallinitätsgrad von 35 % oder mehr bei einer Kristallisationstemperatur von 100 bis 130 °C aufweist, wobei der Kristallinitätsgrad wie in der Beschreibung offenbart gemessen wird.

4. Polylactidharzzusammensetzung nach Anspruch 1, wobei:
das zweite Nukleierungsmittel eine Verbindung ist, die durch die folgende chemische Formel 1 dargestellt wird, und ein gewichtsmittleres Molekulargewicht von 1.000 bis 50.000 aufweist, wobei das gewichtsmittlere Molekulargewicht wie in der Beschreibung offenbart gemessen wird: 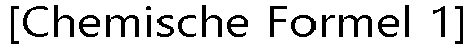 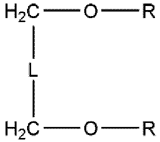
wobei in der chemischen Formel 1
L ist: 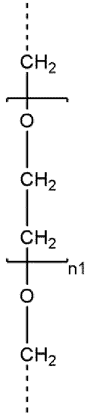
wobei
n1 eine ganze Zahl von 1 bis 30 ist, und
R ein Substituent ist, der durch die folgende chemische Formel 2 dargestellt wird, 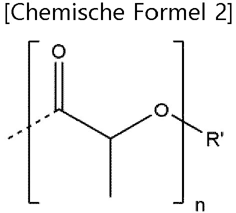
wobei
n die Anzahl der Wiederholungseinheiten darstellt, und
R' Wasserstoff oder Acetyl ist.

5. Polylactidharzzusammensetzung nach Anspruch 1, wobei:
ein gewichtsmittleres Molekulargewicht des Polylactidharzes 70.000 bis 400.000 beträgt, wobei das gewichtsmittlere Molekulargewicht wie in der Beschreibung offenbart gemessen wird.

## Revendications

1. Composition de résine de polylactide comprenant une résine de polylactide, un premier agent de nucléation et un second agent de nucléation,
dans laquelle la composition de résine polylactide a une demi-vie de cristallisation de 2 minutes ou moins à une température de cristallisation de 100 à 130°C, dans laquelle la demi-vie de cristallisation est mesurée comme indiqué dans la spécification,
le premier agent nucléant est l'uracile, et il est contenu dans une quantité de 0,1 à 5 % en poids par rapport au poids total de la composition de résine polylactide, et
le second agent de nucléation est un composé contenant une structure d'oligomère lactide, et contenu dans une quantité de 3 à 25% en poids par rapport au poids total de la composition de résine polylactide.

2. Composition de résine polylactide de la revendication 1, dans laquelle:
la composition de résine polylactide a une demi-vie de cristallisation de 1,3 minute ou moins à une température de cristallisation de 100 à 130°C.

3. Composition de résine polylactide de la revendication 1, dans laquelle:
la composition de résine polylactide a un degré de cristallinité de 35 % ou plus à une température de cristallisation de 100 à 130 °C, le degré de cristallinité étant mesuré comme indiqué dans la spécification.

4. Composition de résine polylactide de la revendication 1, dans laquelle:
le second agent nucléant est un composé représenté par la formule chimique 1 suivante, et a une masse moléculaire moyenne en poids de 1.000 à 50.000, où la masse moléculaire moyenne en poids est mesurée comme indiqué dans la spécification : 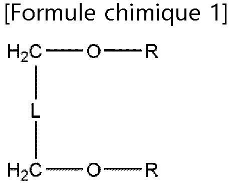
dans laquelle, dans la formule chimique 1,
L est: 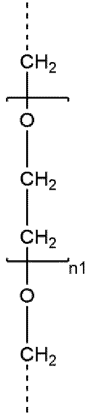
dans lequel,
n1 est un nombre entier de 1 à 30, et
R est un substituant représenté par la formule chimique suivante 2, 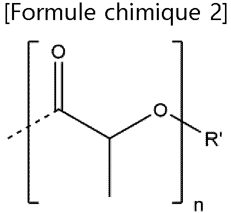
dans lequel,
n représente le nombre d'unités répétitives, et
R' est un hydrogène ou un acétyle.

5. Composition de résine polylactide de la revendication 1, dans laquelle:
la masse moléculaire moyenne en poids de la résine polylactide est comprise entre 70.000 et 400.000, la masse moléculaire moyenne en poids étant mesurée comme indiqué dans la spécification.
